Europäisches Patentamt

European Patent Office

Office européen des brevets

(11) Numéro de publication: **0 395 479**
**A1**

(19)

## (12) DEMANDE DE BREVET EUROPEEN

(21) Numéro de dépôt: 90401083.2

(22) Date de dépôt: 20.04.90

(51) Int. Cl.5: **B64D 15/20**

(30) Priorité: 28.04.89 FR 8905675

(43) Date de publication de la demande:
**31.10.90 Bulletin 90/44**

(84) Etats contractants désignés:
**BE DE ES GB IT NL**

(71) Demandeur: **THOMSON-CSF**
**51, Esplanade du Général de Gaulle**
**F-92800 Puteaux(FR)**

(72) Inventeur: **Michoud, Vincent**
**Thomson-CSF, SCPI, Cédex 67**
**F-92045 Paris La Défense(FR)**
Inventeur: **Beigbeder, Gérard**
**Thomson-CSF, SCPI, Cédex 67**
**F-92045 Paris La Défense(FR)**

(74) Mandataire: **Courtellemont, Alain et al**
**THOMSON-CSF SCPI**
**F-92045 PARIS LA DEFENSE CEDEX 67(FR)**

(54) **Détecteur de givre en particulier, pour véhicule, et principalement pour aéronef.**

(57) L'invention concerne la détection optique de givre.

Une source (1) envoie de la lumière vers un récepteur (3) par un canal optique (2) dont une partie (24) présente une interface avec le milieu extérieur. La lumière qui arrive sur cette interface est réfléchie vers le récepteur (3) quand le milieu extérieur est en contact avec de l'air et est réfractée vers le milieu extérieur en présence de pluie ou de givre.

La pluie en ruisselant sur l'interface crée une modulation dans le signal du récepteur, que ne crée pas le givre. Les circuits en aval du récepteur (3) recherchent cette modulation pour déterminer si les modifications du signal du récepteur sont dues à la pluie ou au givre.

Application en particulier à la détection de la formation du givre sur un aéronef.

FIG_1

EP 0 395 479 A1

### Détecteur de givre, en particulier pour véhicule e, principalement, pour aéronef

La présente invention se rapporte à des détecteurs de givre utilisables en particulier sur véhicules et, principalement, sur des aéronefs.

Il existe de tels détecteurs qui utilisent, en fait, de simples détecteurs optiques de niveau, tels qu'il y en a dans la paroi de certaines cuves. Le détecteur comporte un canal optique qui relie une source de lumière à un récepteur ; une partie de la paroi du canal optique forme interface avec le milieu extérieur ; dans le cas d'une cuve le milieu extérieur au canal optique est l'intérieur de la cuve, dans le cas de détecteurs de givre le milieu extérieur est le milieu dans lequel se déplace le véhicule. Dans ces détecteurs la lumière de la source arrive sur l'interface et, en fonction de l'indice de réfraction du milieu extérieur, soit est réfléchie vers le récepteur soit est réfractée, au moins partiellement, vers le milieu extérieur : réflexion quand le milieu extérieur est l'air, réfraction quand le milieu extérieur est du givre ou un liquide ; le récepteur reçoit donc plus ou moins de lumière et un circuit de comparaison compare le signal de sortie du récepteur avec un signal de référence et déclenche un signal d'alarme de givre ou un signal de niveau atteint lorsque la comparaison montre que le signal de sortie du récepteur est inférieur à la valeur de référence, c'est-à-dire qu'il y a eu réfraction. Pour la détection du givre le signal d'alarme ainsi obtenu est une indication peu sûre car il est pratiquement impossible de distinguer ainsi entre la pluie et le givre en raison des indices de réfraction très voisins de l'eau à l'état liquide et du givre, et l'expérience montre qu'une mince pellicule de pluie a les mêmes effets de réfraction qu'une couche de givre queue que soit son épaisseur.

La présente invention a pour but d'éviter ou pour le moins de réduire les inconvénients ci-avant mentionnés.

Ceci a été obtenu à la suite de l'observation du phénomène d'écoulement de l'eau de pluie sur une paroi d'un véhicule en mouvement : lorsque la vitesse du véhicule est suffisante pour que l'air balaye la paroi à l'endroit où se fait l'observation, l'écoulement de l'eau de pluie ne se fait pas de façon uniforme mais se fait par gouttelettes successives ou par vaguelettes successives ; il en résulte une modulation de la lumière reçue par le récepteur et donc du signal délivré par le récepteur, or un tel phénomène ne se produit pas avec le givre car le givre, même lorsqu'il ne se dépose pas de façon homogène, ne s'écoule pratiquement pas sur la paroi du véhicule.

La présente invention propose un détecteur de givre dans lequel une recherche de cette modulation est effectuée pour déterminer si les perturbations dans la lumière reçue par le récepteur sont dues à la pluie ou au givre.

Selon l'invention un détecteur comportant une source de lumière, un canal optique dont une partie de la paroi forme une interface avec un milieu extérieur, un récepteur couplé à la source par le canal, un circuit de comparaison couplé au récepteur pour en recevoir un signal et fournir un signal logique dont les niveaux 1 et 0 correspondent respectivement à des valeurs du signal qu'il reçoit supérieures à une première valeur de référence et inférieures à une $n^e$ valeur de référence, où n est un entier positif inférieur à 3, est caractérisé en ce que, pour fonctionner en détecteur de givre, il comporte un circuit de détection couplé à la sortie du circuit de comparaison pour déterminer si le signal logique présente un niveau 0 depuis au moins un laps de temps de valeur prédéterminée et pour fournir un signal de détection

La présente invention sera mieux comprise et d'autres caractéristiques apparaîtront à l'aide de la description ci-après et des figures s'y rapportant, qui représentent :

- la figure 1, un schéma d'un détecteur selon l'invention,
- la figure 2 des diagrammes des temps relatifs à différents signaux du détecteur selon la figure 1,
- la figure 3 une vue plus détaillée d'un des éléments de la figure 1.

Sur les différentes figures les éléments correspondants sont désignés par les mêmes repères.

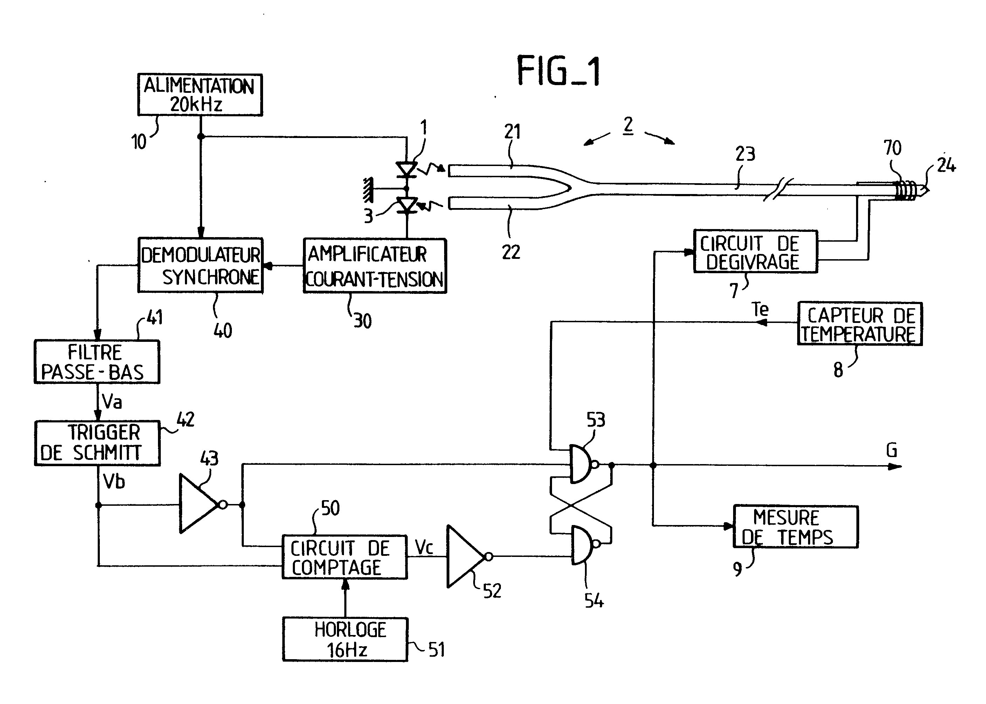

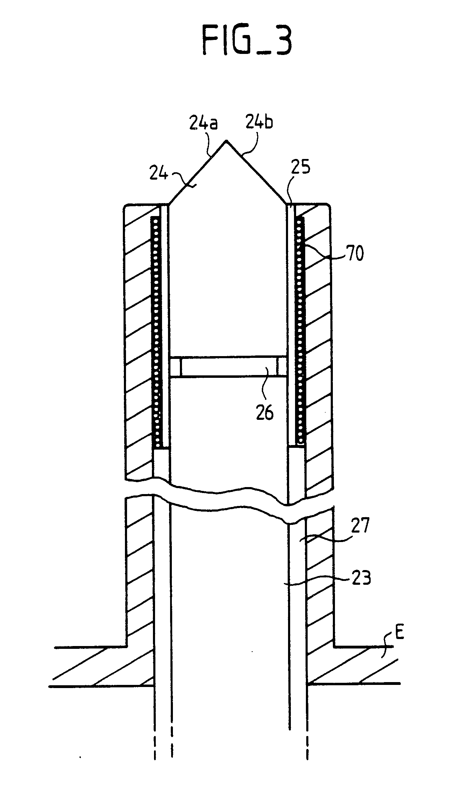

La figure 1 montre un détecteur de givre avec une source de lumière constituée par une diode électroluminescente 1 avec son alimentation formée par un générateur de signaux en créneaux à 20 kHz. La diode est une diode fonctionnant dans l'infrarouge, dans la bande 880-900 nm. Une partie de la lumière émise par la diode 1 est dirigée par un canal optique 2 vers une photodiode 3 et le montage est réalisé de manière que la photodiode 3 reçoive de la lumière émise par la diode 1 uniquement par le canal optique 2. Ce canal optique comporte un faisceau formé de fibres optiques, séparé par moitié, au voisinage des diodes 2, 3, en un faisceau d'émission 21 et un faisceau de réception 22, les deux moitiés étant regroupées en un faisceau unique 23 qui aboutit un prisme 24. Le faisceau 21 dirige la lumière de la diode 1 vers le faisceau 23 qui la dirige vers le prisme 24. Le prisme 24, qui apparaît mieux sur la figure 3, est collé au moyen d'une colle optique 26 sur l'extrémité du faisceau 23 ; il comporte deux faces planes 24a, 24b à 90 degrés l'une de l'autre, formant interface avec le milieu extérieur qui, dans l'exemple décrit, est le milieu dans lequel se trouve un avion sur lequel le détecteur de givre est monté. Le faisceau 23 à un double rôle : par une partie de ses fibres il achemine la lumière provenant de la diode 1 vers la face 24a du prisme 24 et par une autre partie de ses fibres il achemine la lumière provenant de la face 24b du prisme vers le faisceau 22, qui l'amène vers la photodiode 3. La lumière qui arrive sur la face 24a, avec un angle d'incidence moyen de 45 degrés, est soit réfléchie vers la face 24b si le milieu extérieur, au niveau de la face 24a, est de l'air, soit réfractée vers le milieu extérieur si le milieu extérieur, au niveau de la face 24a, est de l'eau ou du givre dont l'indice de réfraction est de l'ordre de 1,3 ; il en résulte une réduction, voire une suppression, de la lumière transmise la photodiode 3. Dans l'exemple de réalisation qui a servi à la description, le prisme est placé à 7cm de la paroi du fuselage au voisinage du nez de l'avion ; il est ainsi soumis à un fort balayage d'air lorsque l'avion est en vol mais se trouve à l'abri des perturbations dites de couche limite, c'est-a-dire des perturbations de l'écoulement d'air qui apparaissent dans le voisinage immédiat du fuselage. Une telle position du prisme fait que, si le givre se dépose sur les faces 24a, 24b du prisme 24, par contre la pluie ne fait que glisser sur ces faces, à la manière de gouttes de pluie sur une vitre ; il en résulte, lorsque de la pluie frappe les faces 24a, 24b du prisme 24, une modulation à fréquence basse de la quantité de lumière transmise à la photodiode 3 alors qu'avec l'apparition du givre, cette modulation n'apparaît pas : il y a en permanence réfraction, et donc perte pour la photodiode 3, d'une quantité importante de lumière.

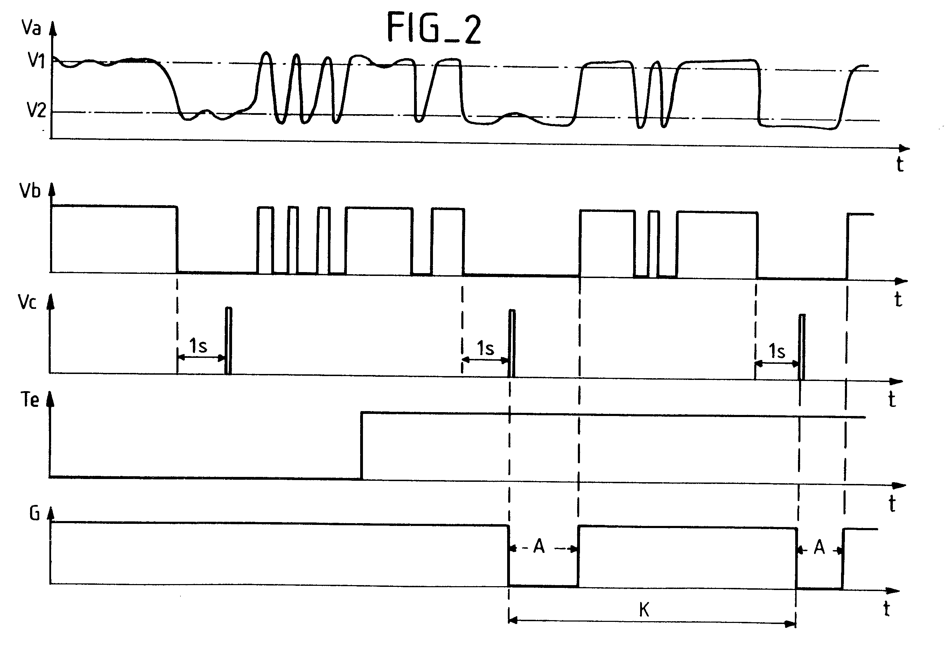

Le signal de sortie de la photodiode 3 est amplifié dans un amplificateur courant-tension 30 puis appliqué à un démodulateur synchrone qui reçoit le signal en créneaux à 20 kHz de l'alimentation 10. Le démodulateur synchrone 40 est suivi d'un filtre passe-bas 41 de fréquence de coupure égale à 70 Hz dans l'exemple décrit ; ces deux circuits fournissent un signal correspondant à la valeur moyenne du signal de l'amplificateur 30 mais débarrassé des perturbations dues à la lumière parasite provenant du milieu extérieur ; en effet cette lumière parasite affecte de façon identique les niveaux bas et hauts des créneaux de la lumière provenant de la diode 1 alimentée par les créneaux à 20 kHz de l'alimentation 10, si bien que le démodulateur synchrone qui multiplie respectivement par 1 et -1 les niveaux bas et hauts des créneaux à 20 kHz, donne aux effets de la lumière parasite une valeur moyenne nulle et permet donc d'éliminer ces effets par le filtre 41. Le signal Va ainsi obtenu est représenté, en fonction du temps t, sur la figure 2.

Le signal Va est appliqué à l'entrée d'un circuit de mise en forme constitué par un trigger de Schmitt dont les tensions de seuil V1 et V2 sont indiquées sur le diagramme du signal Va de la figure 2. Le signal Vb de sortie du trigger de Schmitt est représenté, en fonction du temps t, sur la figure 2.

Un circuit de comptage par 16, 50, fournit un signal Vc formé d'impulsions qui apparaissent toutes les secondes, dès que le signal Vb est au niveau 0 depuis au moins une seconde ; ce critère de déclenchement d'impulsions a été choisi comme représentatif de l'apparition de givre sur le prisme 24 étant donné que, dans les conditions d'utilisation du détecteur, telles qu'elles ont été considérées lors de l'expérimentation, il s'est avéré que le signal Vb, en cas de pluie, ne restait à zéro que pendant des intervalles de temps très inférieurs à la seconde. Pour fournir ces impulsions le circuit de comptage par 16 compte au rythme d'une horloge à 16 Hz, 51, pendant les niveaux 0 du signal Vb, c'est-à-dire pendant les niveaux 1 du signal Vb inversé par un inverseur 43, et est remis à zéro par les niveaux 1 du signal Vb. Les impulsions du signal Vc, fournies par le circuit 50 sont représentées sur la figure 2.

Le signal Vc, après inversion dans un inverseur 52, est appliqué à la seconde entrée d'une porte ET à inverseur de sortie, 54, qui, avec une autre porte ET à inverseur de sortie 53, constitue une bascule ; dans cette bascule la première entrée de la porte 54 est reliée à la sortie de la porte 53, et les trois entrées de la porte 53 reçoivent respectivement le signal Vb inversé par l'inverseur 43, le signal de sortie de la porte 54 et le signal Te fourni par un capteur de température 8, situé au voisinage du prisme 24. Le signal Te est destiné à éviter des déclenchements intempestifs d'alarme au givre quand la température extérieure dépasse une valeur critique au dessus de laquelle la formation de givre n'est pas possible ; dans l'exemple décrit le capteur 8 a été réglé pour fournir un signal de niveau 1 lorsque la température extérieure est inférieure à +1°C.

La bascule 53, 54 fournit un signal G de niveau 1 tant que du givre n'est pas détecté et de niveau 0 dans le cas contraire. Le signal G est représenté, en fonction du temps, sur la figure 2 et les intervalles de temps correspondant à une alarme pour détection de givre ont été notés A sur cette figure. Telle qu'elle est montrée la bascule 53, 54 fait passer le signal G au niveau 0 quand, à la fois :
- le signal Te est au niveau logique 1
- le signal Vb est au niveau logique 0
- et qu'une impulsion du signal Vc a fait passer à 1 la sortie de la porte ET à inverseur 54,
le retour du signal G à la valeur 1 ne peut plus se faire alors que si la température extérieure passe au dessus de la valeur critique (: signal au niveau logique 0) ou si le signal Vb passe au niveau logique 1.

Le signal G ainsi obtenu sert non seulement de signal d'alarme au givre mais sert également à déclencher un circuit de dégivrage 7 et à effectuer une mesure de temps entre givrages successifs par un circuit de mesure de temps, 9.

Le circuit de dégivrage, qui fonctionne tant que le signal G est au niveau 0, c'est-a-dire tant que la présence de givre a été détectée, alimente une bobine, 70, en fil résistif qui entoure le prisme 24 et l'extrémité du faisceau 23 ; cette bobine assure un dégivrage efficace du prisme 24 qui est rapidement débarrassé de sa couche de givre. Dès que le prisme 24 est débarrassé du givre qui le recouvre le signal G repasse à 1, le circuit de dégivrage 7 est arrêté et la formation de givre est à nouveau possible sur les faces du prisme 24 ; le circuit de mesure de temps 9, qui est déclenché par les fronts descendants du signal G mesure la valeur de l'intervalle de temps K qui sépare deux détections successives de l'alarme au gel ; cet intervalle de temps donne l'indication de sévérité de givrage.

Le figure 3, dont il à déjà été question plus avant, est une vue en coupe du canal optique 2 de la figure 1 dans la partie où le faisceau 23 traverse le fuselage E de l'avion. Le faisceau 23 a un diamètre de 5mm, et est entouré par un manchon 27 ; l'extrémité du faisceau est collée, comme cela a déjà été indiqué, d'un côté du prisme 24 dont l'autre côté comporte les faces 24a, 24b. Une douille 25 entoure le prisme 24 set l'extrémité du faisceau 23 ; elle est entourée par la bobine 70 qu'alimente le circuit de dégivrage 7. L'ensemble est protégé par une gaine métallique tubulaire qui laisse apparaître les faces 24a, 24b et qui est rendue solidaire du fuselage de l'avion.

Il est noter que la douille 25 à été réalisée en un alliage magnétique présentant un point de Curie à 230°C et que la bobine 70 était alimentée en 115V, 400 Hz. Ceci permet de combiner un chauffage par effet Joule dans la bobine 70 et par induction dans la douille 25, avec une limitation de la température de chauffage ; en effet au dessus de à 230°C la perméabilité magnétique de la douille chute très fortement et le simple contrôle du courant consommé permet de limiter la température de la douille à environ 250°C, sans avoir passer, pour cela, par une mesure de sa température.

Il est remarquer que la température élevée à laquelle est porté le prisme permet, outre un dégivrage rapide, un nettoyage des impuretés qui pourraient s'être déposées sur les faces du prisme.

L'invention n'est pas limitée à l'exemple décrit. C'est ainsi que le canal optique 2 peut n'être constitué que par une fibre optique avec les diodes 1 et 3 respectivement placées à ses deux extrémités ; la lumière est transmise de manière à se propager par réflexions successives sur les parois de la fibre et le trajet passe par un endroit où la fibre est débarrassée de sa gaine de protection et est en contact avec le milieu extérieur ; si, en cet endroit, le milieu extérieur est de l'air, la lumière continue son trajet par réflexions successives si le milieu extérieur est de l'eau ou du givre, au moins une partie de la lumière provenant de la diode 1 est perdue par réfraction vers le milieu extérieur ; il suffit alors de distinguer entre l'eau et le givre par la présence ou l'absence de modulation dans le signal provenant de la photodiode 3. On peut également concevoir un détecteur de givre dans lequel le canal optique comporte une interface constituée par l'extrémité effilée d'une fibre optique multimode.

De même les différentes fonctions assurées par les circuits selon la figure 1 peuvent être réalisées par tous autres circuits adéquats. Quant au circuit de dégivrage 7, avec la bobine 70, et à l'appareil de mesure de temps 9, ils peuvent être supprimés, mais il ne sera plus possible d'évaluer la sévérité de givrage que donne la mesure du temps entre deux apparitions de givrage séparées par un réchauffage. Il est également possible de réaliser un détecteur de givre selon l'invention sans le capteur de température 8.

De plus le trigger de Schmitt 42 peut être remplacé par un circuit de mise en forme ne présentant qu'un seul seuil, c'est-a-dire par un circuit de comparaison à une seule valeur, ce qui revient à donner une même valeur V aux tensions V1, V2 représentées sur la figure 2 ; la tension Vb prendra alors la valeur 1 lorsque Va sera supérieure à V et la valeur 0 lorsque Va sera inférieure à V.

L'invention est applicable d'une façon générale à la détection de la formation de givre sur une paroi, dans la mesure où la pluie qui frappera l'interface du canal optique sera évacuée au fur et à mesure de son arrivée.

## Revendications

1- Détecteur comportant une source de lumière (1), un canal optique (2) dont une partie (24a, 24b) de la paroi forme une interface avec un milieu extérieur, un récepteur (3, 30) couplé à la source par le canal, un circuit de comparaison (42) couplé au récepteur pour en recevoir un signal et fournir un signal logique (Vb) dont les niveaux 1 et 0 correspondent respectivement à des valeurs du signal qu'il reçoit supérieures à une première valeur de référence et inférieures à une $n^e$ valeur de référence, où n est un entier positif inférieur à 3, caractérisé en ce que, pour fonctionner en détecteur de givre, il comporte un circuit de détection (50-54) couplé à la sortie du circuit de comparaison (42) pour déterminer si le signal logique présente un niveau 0 depuis au moins un laps de temps de valeur prédéterminée et pour fournir un signal de détection (G).

2 - Détecteur selon la revendication 1, caractérisé en ce qu'il comporte des moyens de dégivrage (7, 70) pour dégivrer le canal optique (2) au niveau de l'interface (24a, 24b) et en ce que les moyens de dégivrage sont commandés par le signal de détection (G).

3- Détecteur selon la revendication 2, caractérisé en ce qu'il comporte un circuit de mesure de temps (9) pour mesurer le temps écoulé entre le début de deux commandes de dégivrage successives des moyens de dégivrage (7, 70).

4. Détecteur selon l'une quelconque des revendications précédentes, caractérisé en ce qu'il comporte un capteur de température (8) pour mesurer la température du milieu extérieur et faire dépendre la prise en compte du signal de détection (G) de la valeur de la température mesurée.

5. Véhicule caractérisé en ce qu'il comporte un détecteur de givre selon l'une quelconque des revendications précédentes.

FIG_1

# FIG_2

EP 0 395 479 A1

# FIG_3

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3940622 (J.R.STALLABRASS ET AL)<br>* colonne 2, lignes 51 - 63 *<br>* colonne 3, ligne 61 - colonne 4, ligne 2 *<br>* colonne 4, lignes 56 - 57 *<br>* colonne 5, lignes 27 - 35 *<br>* colonne 5, ligne 55 - colonne 6, ligne 3 *<br>* colonne 6, lignes 22 - 43 *<br>* colonne 6, ligne 50 - colonne 7, ligne 23; figures * | 1-5 | B64D15/20 |
| A | US-A-3540025 (B.P.LEVIN)<br>* colonne 2, lignes 10 - 26 *<br>* colonne 2, ligne 62 - colonne 3, ligne 17 *<br>* colonne 4, ligne 3 - colonne 6, ligne 20; figures * | 1-5 | |
| A | EP-A-0249296 (PHILIPS)<br>* le document en entier * | 1-5 | |
| A | US-A-3571709 (R.M.GAERTNER)<br>* colonne 1, lignes 33 - 49; figures * | 1-5 | |
| A | WO-A-8809980 (ROSEMOUNT INC)<br>* abrégé *<br>* page 1, lignes 9 - 26 *<br>* page 4, ligne 10 - page 5, ligne 13 *<br>* page 7, ligne 27 - page 8, ligne 8 * | 1-5 | DOMAINES TECHNIQUES RECHERCHES (Int. Cl.5 )<br><br>B64D<br>G08B |

Le présent rapport a été établi pour toutes les revendications

| Lieu de la recherche | Date d'achèvement de la recherche | Examinateur |
|---|---|---|
| LA HAYE | 26 JUILLET 1990 | ESTRELA Y CALPE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)